# EUROPÄISCHE PATENTSCHRIFT

(11) **EP 0 955 482 B1**
(45) Veröffentlichungstag und Bekanntmachung des Hinweises auf die Patenterteilung: **02.03.2005**
(21) Anmeldenummer: 99107705.8
(22) Anmeldetag: 17.04.1999
(51) Int. Cl.: F16F 1/38, B60G 11/12

(54) **Gelenklager, insbesondere Federaugenlager**
Pivot bearing, particularly spring eye bearing
Palier à articulation, en particulier palier d'oeillet de ressort

(30) Priorität: 08.05.1998 DE 19820773
(43) Veröffentlichungstag der Anmeldung: 10.11.1999
(73) Patentinhaber: Jörn ELZA GmbH, 71336 Waiblingen (DE)
(72) Erfinder: Zawadzki, Bernd, 71404 Korb (DE)
(74) Vertreter: Neubauer, Hans-Jürgen, Dipl.-Phys.

(56) Entgegenhaltungen:
- EP-A- 0 353 347
- EP-A- 0 373 307
- EP-A- 0 493 731
- DE-A- 3 511 308
- DE-A- 4 204 252
- GB-A- 1 000 691
- GB-A- 1 101 928
- US-A- 1 911 866
- US-A- 2 238 197
- US-A- 4 809 960

## Beschreibung

Die Erfindung betrifft ein Gelenklager, insbesondere ein Federaugenlager nach dem Oberbegriff des Anspruchs 1.

Ein durch Vorbenutzung bekanntes Gelenklager als Federaugenlager einer Blattfederlagerung umfaßt eine zylindrische Gelenkbuchse, bestehend aus wenigstens einem äußeren Rohrteil, auf dessen zylindrischer Außenfläche eine Gummischicht aufvulkanisiert ist. Ein inneres Rohrteil ist in das äußere Rohrteil der Gelenkbuchse formschlüssig eingesteckt. Als erstes, karosserieseitiges Lagerteil sind zwei beabstandete Halteplatten als Bauteile eines Federgehänges einer Blattfederlagerung eines Nutzfahrzeugs vorgesehen.

Das Federauge der Blattfeder bildet ein Aufnahmeauge als zweites Lagerteil, in das die zylindrische, im Herstellzustand zumindest in Teilbereichen im Durchmesser größere Gelenkbuchse unter radialer Vorspannung der Gummischicht zur Herstellung einer verdrehfesten Verbindung zwischen der Gelenkbuchse und dem Aufnahmeauge eingepreßt ist. Die vorstehende Anordnung ist mittels einer Befestigungsschraube zwischen den Halteplatten eingespannt, dergestalt, daß ein Schraubenbolzen im inneren Rohrteil vorzugsweise formschlüssig aufgenommen ist und sich mit einem Bolzenkopf an der Außenseite einer Halteplatte und mit einer Schraubenmutter an der Außenseite der anderen Halteplatte abstützt. Dabei ist das mit einer axialen Verspannlänge etwas längere der beiden Rohrteile, das als Stahlrohr ausgebildet ist, fest und unverdrehbar zwischen den Halteplatten eingespannt.

Das äußere Rohrteil ist hier als Stahlrohr mit der axialen Verspannlänge ausgebildet, auf dem auch die Gummischicht aufvulkanisiert ist. Das dagegen geringfügig kürzere, innere Rohrteil ist als Kunststoffrohr ausgebildet und dient lediglich dazu, den inneren Durchmesser des äußeren Stahlrohres auf den Durchmesser des Schraubenbolzens der Befestigungsschraube zu reduzieren und dadurch das Gelenklager zu zentrieren. Die Einspannkraft und Haltekraft zwischen den Halteplatten wird durch das fest und unverdrehbar eingespannte äußere Stahlrohr aufgenommen und abgestützt. Relativbewegungen zwischen dem ersten und zweiten Lagerteil werden somit hier nach der Montage ausschließlich molekular in der Gummischicht aufgenommen. Eine durchrutschende Verbindung zwischen dem ersten und zweiten Lagerteil ist hier nach der Montage weder möglich noch vorgesehen.

Daher ist die Montage aufwendig und kostenintensiv, da eine Blattfeder auf die statische Belastung vorgespannt und dann die Befestigungsschrauben angezogen werden müssen, wodurch sich die Mittellage für die beidseitig möglichen Einfederungen ergibt, so daß die Gummischicht im Fahrbetrieb ausgehend von dieser Mittellage nicht übermäßig beansprucht wird. Zudem besteht bei einem solchen Gelenklager kein Überlastschutz für Extremeinfederungen.

Bei diesen bekannten Gelenklagern ist im Herstellzustand der Gelenkbuchse die Gummischicht in den axialen Endbereichen zu umlaufenden, radial abstehenden Gummiwülsten verdickt. Die axiale Länge des Aufnahmeauges ist geringer als die der Gelenkbuchse. Im eingepreßten Zustand der Gelenkbuchse liegt das Aufnahmeauge mit abgerundeten Stirnseiten zwischen den unter Vorspannung daran anliegenden Gummiwülsten. Zudem sind die Gummiwülste so dimensioniert, daß sie im montierten Zustand, ebenso wie die Stirnseiten der Gummischicht unter Vorspannung an den Halteplatten anliegen. Damit wird einerseits eine mittige Halterung des Aufnahmeauges zwischen den Halteplatten erreicht mit einer jeweils zwischengeschalteten Gummischicht zwischen den Stirnseiten des Aufnahmeauges und den Halteplatten, die insbesondere auch die axiale Steifigkeit bestimmen.

Die vorbeschriebenen, gattungsgemäßen Gelenklager werden insbesondere für Blattfederlagerungen an leichteren Nutzfahrzeugen bis ca. 15 t verwendet. Für schwere Nutzfahrzeuge sind andere Ausführungen bekannt, wie z. B. Buchsenanordnungen mit Stützringen an Gummischichtstirnseiten (EP 0 493 731 B1).

Ein Gelenklager mit den Merkmalen des Oberbegriffs des Anspruchs 1 ist aus EP 0 353 347 A bekannt. Dort ist bereits ein Kunststoffrohr als äußeres Rohrteil verwendet, das auf dem darin eingesteckten Lagerbolzen durch Reibschluss bis zu einem bestimmten Losbrechmoment gehalten ist.

Aufgabe der Erfindung ist es, ein Gelenklager, insbesondere als Federaugenlager einer Blattfeder zu schaffen, das bei guter Funktion einfach montierbar ist.

Diese Aufgabe wird mit den Merkmalen des Anspruchs 1 gelöst.

Das gegenüber dem äußeren Kunststoffrohr mit einer axialen Verspannlänge etwas längere, innere Stahlrohr ist unverdrehbar zwischen den Halteplatten eingespannt. Das äußere Kunststoffrohr ist auf dem darin formschlüssig eingesteckten inneren Stahlrohr durch Reibschluß bei normal vorgesehenen Betriebsbedingungen bis zu einem bestimmten Losbrechmoment verdrehfest gehalten. Bei diesen normalen Betriebsbedingungen werden somit Gelenkbewegungen ohne Gleitbewegungen und ohne Verschleiß in der Gummischicht aufgenommen. Der Reibschluß ist dabei jedoch so dimensioniert, daß bei einer großen Drehbelastung über dem Losbrechmoment das Kunststoffrohr auf dem Stahlrohr zum Abbau der großen Drehbelastung in eine weniger belastete, jedoch dort wieder drehfest gehaltene Position durchrutscht.

Dieser Effekt kann vorzugsweise bei der Montage von Blattfedern vorteilhaft genutzt werden. Es ist hierbei nicht mehr erforderlich, die Blattfedern in ihrer statisch belasteten Null-Lage vorgespannt zu montieren, da sich eine nicht entsprechend vorgespannt montierte Gelenkbuchse beim Aufbringen der statischen Belastung mittels Durchrutschen selbsttätig auf die mittlere Null-Lage einstellt. Allgemein wird durch die Möglichkeit eines Durchrutschens bei sehr hohen Belastungen ein Überlastschutz für die Gummischicht erreicht.

Vorteilhaft wird die Einstellung des Reibschlusses dergestalt durchgeführt, dass das Kunststoffrohr hinsichtlich seiner Materialstärke und Elastizität so dimensioniert ist, daß ein stabiles Rohrteil vorliegt. Beim Einpressen der Gelenkbuchse in das Aufnahmeauge wird bei entsprechender Dimensionierung des Durchmessers des Aufnahmeauges und der Gummischicht eine bestimmte radiale Vorspannung in der Gummischicht aufgebaut. Diese radiale Vorspannung wirkt auch auf den Außenumfang des Kunststoffrohrs, das trotz seiner Stabilität so weit radial elastisch verformbar sein soll, daß an der Anlagefläche zum Stahlrohr der o. g. gewünschte Reibschluß mit einem bestimmten vorgegebenen Losbrechmoment entsteht. Dies hat den Vorteil, daß das Stahlrohr ohne Übermaß gegenüber dem Innendurchmesser des Kunststoffrohrs bei der Montage einfach von Hand in das Kunststoffrohr eingesteckt werden kann und der hohe Reibschluß erst nach dem Einpressen in das Aufnahmeauge aufgebaut wird. Zudem kann mit diesen Maßnahmen der Reibschluß und damit das Losbrechmoment mit geringen Toleranzen eingestellt und über die Lebensdauer des Gelenklagers entsprechend aufrecht erhalten werden.

Zudem ist an beiden Stirnseiten des Kunststoffrohrs je eine radial nach innen weisende und umlaufend unter Vorspannung am eingesteckten Stahlrohr anliegende innere Dichtlippe anvulkanisiert. Diese Dichtlippen dichten den Bereich zwischen den Anlageflächen Kunststoffrohr/Stahlrohr jeweils stirnseitig gegen Feuchtigkeit und Schmutzpartikel ab. Dadurch wird Korrosion und eine Schwergängigkeit oder ein Blockieren der Durchrutschfunktion auch bei langen Standzeiten und rauhen Betriebsbedingungen verhindert.

Eine weitere vorteilhafte Funktion dieser inneren Dichtlippen ist dann gegeben, wenn die Gelenkbuchse durch ein Einstecken des Stahlrohrs von Hand in das Kunststoffrohr vormontiert wird. Hierbei halten die Dichtlippen als Vormontagehalterung das Stahlrohr im Kunststoffrohr bis zum Einpressen in das Aufnahmeauge lagerichtig fest.

Mit den Merkmalen des Anspruchs 2 wird eine konkrete, funktionsfähige und einfach herstellbare Ausbildung der inneren Dichtlippen angegeben. Dabei sind die inneren Dichtlippen jeweils in einer umlaufenden, radial inneren Materialausnehmung des Kunststoffrohrs zusammen mit der Gummischicht an der Zylinderaußenfläche anvulkanisiert. An den Stirnseiten des Kunststoffrohrs entstehen aufgrund von herstellungsbedingten Überfließspalten zudem dünne Gummiauflagen, die vorzugsweise bei entsprechender Längenabstimmung zwischen dem Stahlrohr und dem Kunststoffrohr auch zur axialen Abdichtung bei einer Anlage an den Halteplatten verwendet werden können.

Gegebenenfalls ist es gemäß Anspruch 3 vorteilhaft, zwischen den Anlageflächen Kunststoffrohr/Stahlrohr eine Fettfüllung einzubringen, die insbesondere bei einer Ausführung mit Dichtlippen eingeschlossen und erhalten bleibt.

Gemäß Anspruch 4 ist eine an sich bekannte Ausbildung der Gummischicht mit in den axialen Endbereichen umlaufenden, radial abstehenden Gummiwülsten vorteilhaft verwendbar. Damit wird eine mittige Halterung des Aufnahmeauges sowie eine Dimensionierung der axialen Steifigkeit auf einfache Weise erreichbar. Zudem liegen die Gummiwülste im montierten Zustand des Gelenklagers unter Vorspannung umlaufend an den Halteplatten an und haben somit eine Dichtfunktion gegenüber den Anlageflächen Kunststoffrohr/Stahlrohr. Da aber bei starken kardanischen Auslenkungen und Belastungen diese umlaufenden Gummiwülste von den Halteplatten abheben können, ist auch bei dieser Ausführungsform eine Ausgestaltung mit den oben beschriebenen Dichtlippen zweckmäßig und vorteilhaft.

Anhand einer Zeichnung wird die Erfindung näher erläutert.

Es zeigen:
- Fig. 1: einen Längsschnitt durch eine zylindrische Gelenkbuchse im Herstellzustand,
- Fig. 2: eine vergrößerte Darstellung des Bereichs Z aus Fig. 1, und
- Fig. 3: einen Längsschnitt durch ein Gelenklager als Federaugenlager im fertig montierten Zustand.

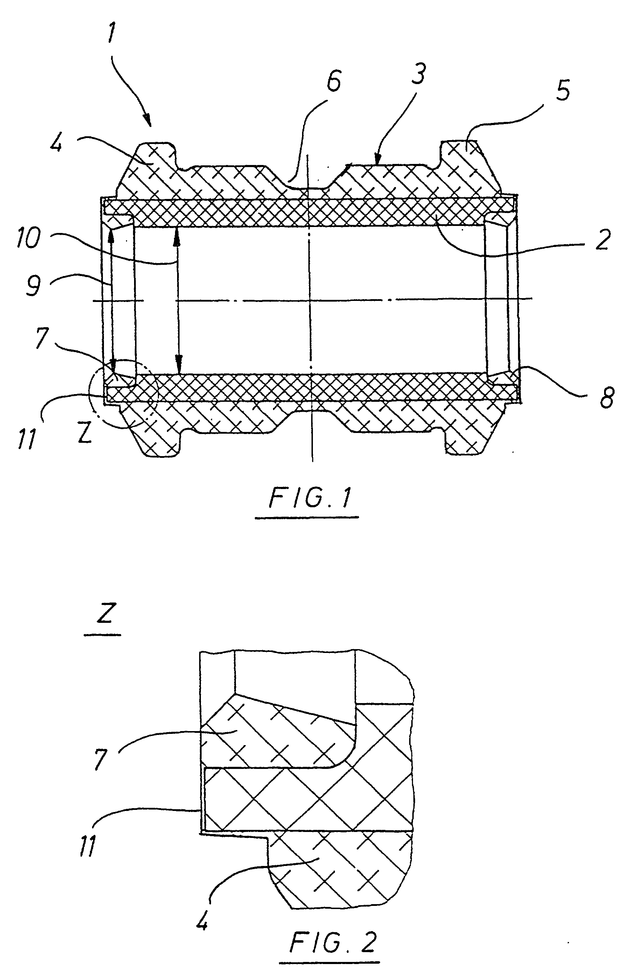

In Fig. 1 ist eine Gelenkbuchse 1 im Herstellzustand dargestellt, bei der auf einem Kunststoffrohr 2 eine Gummischicht 3 aufvulkanisiert ist.

Die Gummischicht 3 weist in den axialen Endbereichen radial abstehende Gummiwülste 4, 5 sowie eine in der Längsmitte umlaufende Einschnürung 6 auf. In den anderen Bereichen hat die Gummischicht eine etwa gleichbleibende Dicke.

An beiden Stirnseiten des Kunststoffrohrs 2 sind umlaufende, radial innere Materialausnehmungen geschaffen, in denen radial nach innen weisende, umlaufende Dichtlippen anvulkanisiert sind, wie dies an der vergrößerten Darstellung nach Fig. 2 deutlich ersichtlich ist. Der Innendurchmesser 9 im Bereich der Dichtlippen 7, 8 ist etwas kleiner als der Innendurchmesser 10 des Kunststoffrohrs 2.

Die Dichtlippen 7, 8 sind zusammen mit der Gummischicht 3 anvulkanisiert, wobei an den Stirnseiten des Kunststoffrohrs aufgrund von herstellungsbedingten Überfließspalten in der Vulkanisierform dünne Gummiauflagen 11 ausgebildet sind. Wie aus Fig. 2 deutlich zu ersehen ist, sind die Gummiwülste 4, 5 gegenüber den Stirnseiten des Kunststoffrohrs 2 etwas zurückgesetzt.

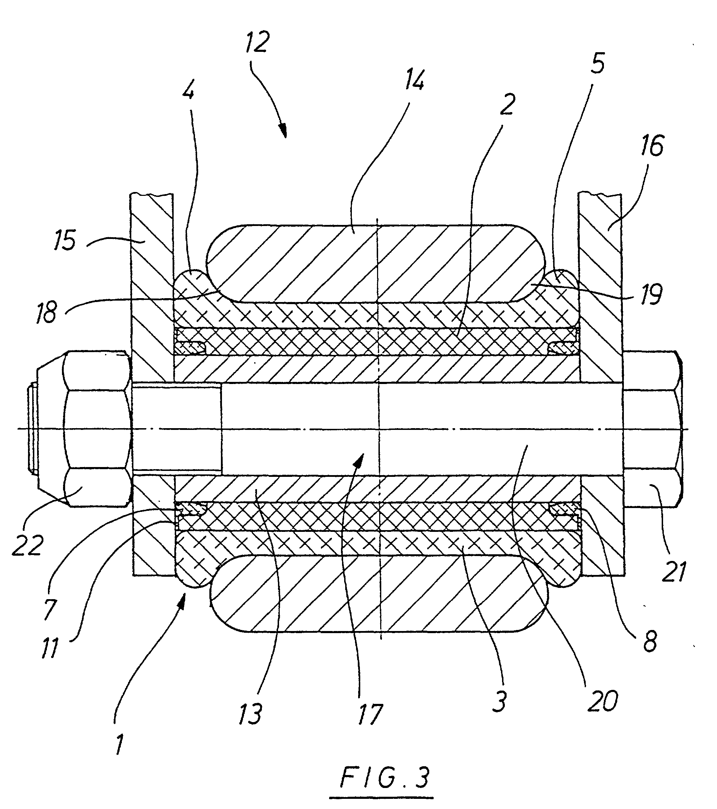

In Fig. 3 ist unter Verwendung der Gelenkbuchse ein fertig montiertes Gelenklager als Federaugenlager 12 dargestellt.

Für die Montage dieses Federaugenlagers 12 wird in die Gelenkbuchse nach Fig. 1 formschlüssig und leichtgängig von Hand ein Stahlrohr 13 eingesteckt, das eine axiale Verspannlänge aufweist, die etwas länger als die des Kunststoffrohrs 2 ist. Beim Einstecken des Stahlrohrs in das Kunststoffrohr legen sich die Dichtlippen unter Vorspannung an das Stahlrohr an, so daß dieses in diesem Zustand ohne herauszufallen im Kunststoffrohr 2 gehalten wird. Die im Kunststoffrohr umlaufenden Materialausnehmungen sind so groß gewählt, daß darin der beim Einstecken des Stahlrohrs 13 verformte Gummi der Dichtlippen 7, 8 aufgenommen wird.

In weiteren Montageschritten wird nun die Einheit aus dem Kunststoffrohr 2 mit der Gummischicht 3 und dem eingesteckten Stahlrohr 13 in ein Aufnahmeauge als Blattfederauge 14 axial eingepreßt. Anschließend wird diese Einheit zwischen zwei Halteplatten 15, 16 mittels einer Verschraubung 17 axial und verdrehfest über das Stahlrohr 13 eingespannt, so wie dies in Fig. 3 dargestellt ist.

Die Verschraubung 17 besteht aus einem Schraubenbolzen 20, der im Stahlrohr 13 formschlüssig aufgenommen ist und sich mit einem Bolzenkopf 21 an der Außenseite einer Halteplatte 16 und mit einer Schraubenmutter 22 an der anderen Halteplatte 15 abstützt.

Durch das Einpressen in das Blattfederauge 14 wird die Gummischicht 3 zusammengepreßt, wobei sich die dadurch entstehende Vorspannung radial auf das Kunststoffrohr 2 überträgt und dieses elastisch zur Erhöhung des Reibschlusses gegenüber dem Stahlrohr 13 verformt und verstärkt zur Anlage bringt.

Die axiale Länge des Blattfederauges 14 ist geringer als die Länge der Gelenkbuchse 1 und so gewählt, daß, wie aus Fig. 3 ersichtlich, im eingepreßten Zustand der Gelenkbuchse das Blattfederauge 14 mit abgerundeten Stirnseiten 18, 19 zwischen den unter Vorspannung daran anliegenden, beim Einpressen und beim Einspannen verformten Gummiwülsten 4, 5 liegt. Weiter liegen die verformten Gummiwülste 4, 5 unter Vorspannung an den Innenseiten der Halteplatten 15, 16 umlaufend an. Dadurch sowie über die entsprechend an den Halteplatten 15, 16 anliegenden stirnseitigen Gummiauflagen 11 und die Dichtlippen 7, 8 wird eine wirksame Abdichtung zwischen den Anlageflächen Kunststoffrohr/Stahlrohr erreicht. Zwischen den Anlageflächen wird vorzugsweise eine durch die Abdichtung wirkungsvoll eingeschlossene Fettfüllung beim Einstecken des Stahlrohrs 13 in das Kunststoffrohr 2 eingebracht.

Die Anordnung ist hinsichtlich der Geometrie und der auftretenden Vorspannkräfte im montierten Zustand gemäß Fig. 3 so dimensioniert, daß das äußere Kunststoffrohr 2 auf dem darin formschlüssig eingesteckten inneren Stahlrohr 13 durch Reibschluß bei normal vorgesehenen Betriebsbedingungen und Belastungen bis zu einem bestimmten Losbrechmoment drehfest gehalten ist, wobei das Stahlrohr 13 für alle auftretenden Belastungsbedingungen verdrehfest zwischen die Halteplatten 15, 16 eingespannt ist. Bei einer großen Drehbelastung über dem vorbestimmten Losbrechmoment rutscht jedoch das Kunststoffrohr 2 auf dem Stahlrohr 13 zum Abbau dieser großen Drehbelastung in eine weniger belastete, jedoch dort wieder drehfest gehaltene Position durch. Insbesondere kann dieser Effekt dazu benutzt werden, daß Blattfedern ohne Vorspannung auf die statische Mittellage montiert werden und sich beim Aufbringen der statischen Belastung die Federaugenlager 12 selbsttätig mittels Durchrutschen auf eine Null-Lage einstellen. Bei Gelenkbewegungen um diese Null-Lage mit üblichen, betriebsmäßigen Drehbelastungen werden diese Bewegungen ohne Gleitbewegungen dann molekular in der Gummischicht 3 aufgenommen, wobei die axiale Steifigkeit des Federaugenlagers 12 insbesondere durch die Ausbildung der Gummiwülste 4, 5 bestimmt wird.

## Patentansprüche

1. Gelenklager, insbesondere Federaugenlager,
mit einer zylindrischen Gelenkbuchse (1) bestehend aus wenigstens einem äußeren Rohrteil, auf dessen Zylinderaußenfläche eine Gummischicht (3) aufvulkanisiert ist,
mit einem inneren Teil (13), das in das äußere Rohrteil der Gelenkbuchse (1) eingesteckt ist,
mit einem Aufnahmeauge (14) als zweites Lagerteil, insbesondere einem Federauge einer Blattfeder, in das die zylindrische, im Herstellzustand zumindest in Teilbereichen im Durchmesser größere Gelenkbuchse (1) unter radialer Vorspannung der Gummischicht (3) zur Herstellung einer verdrehfesten Verbindung zwischen der Gelenkbuchse (1) und dem Aufnahmeauge (14) eingepreßt ist, wobei
das äußere Rohrteil ein Kunststoffrohr (2) ist, und
das äußere Kunststoffrohr (2) auf dem darin eingesteckten inneren Teil (13) durch Reibschluß bei normal vorgesehenen Betriebsbedingungen bis zu einem bestimmten Losbrechmoment drehfest gehalten ist, wobei der Reibschluß so dimensioniert ist, dass bei einer großen Drehbelastung über dem Losbrechmoment das Kunststoffrohr (2) auf dem Teil (13) zum Abbau dieser großen Drehbelastung in eine weniger belastete, jedoch dort wieder drehfest gehaltene Position durchrutscht, insbesondere bei einer nicht vorgespannt montierten Blattfeder, wobei die im zugeordneten Federauge (14) gehaltene Gelenkbuchse (1) auf eine Null-Lage entsprechend der statischen Belastung mittels Durchrutschen selbsttätig einstellbar ist,
**dadurch gekennzeichnet, dass**
das innere Teil ein Rohrteil (13) ist,
dass das erste Lagerteil aus zwei beabstandeten Halteplatten (15, 16) besteht, insbesondere als Bauteile eines Federgehänges einer Blattfederlagerung eines Nutzfahrzeugs,
mit einer Befestigungsschraube (17), wobei ein Schraubenbolzen (20) im inneren Rohrteil aufgenommen ist und sich mit einem Bolzenkopf (21) an der Außenseite einer Halteplatte (16) und mit einer Schraubenmutter an der Außenseite der anderen Halteplatte (15) dergestalt abstützt, dass das mit einer axialen Verspannlänge etwas längere der beiden Rohrteile, das als Stahlrohr ausgebildet ist, fest und unverdrehbar zwischen den Halteplatten (15, 16) eingespannt ist,
dass das Rohrteil (13) gegenüber dem Kunststoffrohr (2) eine größere axiale Verspannlänge aufweist und unverdrehbar zwischen den Halteplatten (15, 16) eingespannt ist,
dass das Kunststoffrohr (2) hinsichtlich seiner Materialstärke und Elastizität so dimensioniert ist, dass sowohl ein stabiles Rohrteil vorliegt als auch beim Einpressen der Gelenkbuchse (1) in das Aufnahmeauge (14) und Aufbringen der durch die Größe des Aufnahmeauges (14) und die Gummischicht (3) dimensionierten radialen Vorspannung in der Gummischicht (3), diese Vorspannung zu einer radialen, elastischen Verformung des Kunststoffrohrs (2) und damit einer Erhöhung des Reibschlusses gegenüber dem inneren Stahlrohr (13) führt,
dass an beiden Stirnseiten des Kunststoffrohrs (2) je eine radial nach innen weisende und umlaufend unter Vorspannung am eingesteckten Stahlrohr (13) anliegende innere Dichtlippe (7, 8) anvulkanisiert ist.

2. Gelenklager nach Anspruch 1, **dadurch gekennzeichnet, dass** die inneren Dichtlippen (7, 8) jeweils in einer umlaufenden, radial inneren Materialausnehmung des Kunststoffrohrs (2) zusammen mit der an der Zylinderaußenfläche liegenden Gummischicht (3) anvulkanisiert sind, wobei an den Stirnseiten des Kunststoffrohrs (2) aufgrund von herstellungsbedingten Überfließspalten zwischen der Gummischicht (3) und den inneren Dichtlippen (7, 8) dünne Gummiauflagen (11) ausgebildet sind, die vorzugsweise bei entsprechender Längenabstimmung zwischen dem Stahlrohr (13) und dem Kunststoffrohr (2) zur axialen Abdichtung gegenüber den Halteplatten (15, 16) verwendbar sind.

3. Gelenklager nach Anspruch 1 oder Anspruch 2, **dadurch gekennzeichnet, dass** zwischen den Anlageflächen zwischen dem Kunststoffrohr (2) und dem Stahlrohr (13) eine Fettfüllung eingebracht ist.

4. Gelenklager nach einem der Ansprüche 1 bis 3, **dadurch gekennzeichnet,**
**dass** im Herstellzustand der Gelenkbuchse (1) die Gummischicht (3) in den axialen Endbereichen zu umlaufenden, radial abstehenden Gummiwülsten (4, 5) verdickt ist,
**dass** die axiale Länge des Aufnahmeauges (14) geringer als die Länge der Gelenkbuchse (1) ist, dergestalt, dass im eingepreßten Zustand der
Gelenkbuchse (1) das Aufnahmeauge (14) vorzugsweise mit abgerundeten Stirnseiten zwischen den unter Vorspannung daran anliegenden Gummiwülsten (4, 5) liegt, und
**dass** im montierten Zustand die Stirnseiten der Gummischicht (3) und die verformten Gummiwülste (4, 5) unter Vorspannung an den Halteplatten (15, 16) anliegen.

## Claims

1. Pivot bearing, particularly spring eye bearing,
with a cylindrical pivot bushing (1), comprising at least one outer tubular part, on the cylindrical outer surface of which a rubber layer (3) is vulcanized,
with an inner part (13), which is inserted into the outer tubular part of the pivot bushing (1),
with a receiving eye (14) as a second bearing part, in particular a spring eye of a leaf spring, into which the cylindrical pivot bushing (1), which at least in partial regions is larger in diameter in the manufactured state, is pressed under radial prestress of the rubber layer (3) to establish a rotationally fixed connection between the pivot bushing (1) and the receiving eye (14),
the outer tubular part being a plastic tube (2), and
the outer plastic tube (2) being held in a rotationally fixed manner on the inner part (13) inserted in it by frictional engagement under normally provided operating conditions up to a specific breakaway torque, the frictional engagement being dimensioned such that, when there is great rotational loading above the breakaway torque, the plastic tube (2) slips on the part (13) into a position in which it is subjected to less loading but is held rotationally fixed again, to reduce this great rotational loading, in particular in the case of a leaf spring not mounted under prestress, it being possible by means of slipping for the pivot bushing (1) that is held in the assigned spring eye (14) to be set automatically to a neutral position corresponding to the static loading,
**characterized in that**
the inner part is a tubular part (13),
**in that** the first bearing part comprises two spaced-apart holding plates (15, 16), particularly as components of a spring hanger of a leaf spring mounting of a commercial vehicle,
with a fastening screw (17), a screw bolt (20) being accommodated in the inner tubular part and being supported with a bolt head (21) on the outer side of one holding plate (16) and supported with a screw nut on the outer side of the other holding plate (15) in such a way that the one of the two tubular parts that has a somewhat longer axial restraining length and is formed as a steel tube is clamped fixedly and unrotatably between the holding plates (15, 16),
**in that** the tubular part (13) has a greater axial restraining length in comparison with the plastic tube (2) and is clamped unrotatably between the holding plates (15, 16),
**in that** the plastic tube (2) is dimensioned with respect to its material thickness and elasticity in such a way that both a stable tubular part is obtained and, when the pivot bushing (1) is pressed into the receiving eye (14) and the radial prestress in the rubber layer (3), dimensioned by the size of the receiving eye (14) and the rubber layer (3), is applied, this prestress leads to a radial, elastic deformation of the plastic tube (2), and consequently to an increase in the frictional engagement with respect to the inner steel tube (13),
**in that** a sealing lip (7, 8) which is radially inwardly facing and peripherally bears under prestress against the inserted steel tube (13) is respectively vulcanized on both end faces of the plastic tube (2).

2. Pivot bearing according to Claim 1, **characterized in that** the inner sealing lips (7, 8) are respectively attached by being vulcanized in a peripheral, radially inner material recess of the plastic tube (2), together with the rubber layer (3) lying on the cylindrical outer surface, manufacturing-dependent overflow gaps having the result that thin rubber coatings (11) are formed on the end faces of the plastic tube (2) between the rubber layer (3) and the inner sealing lips (7, 8) and can be used for axial sealing with respect to the holding plates (15, 16) preferably when there is corresponding matching of the lengths between the steel tube (13) and the plastic tube (2).

3. Pivot bearing according to Claim 1 or Claim 2, **characterized in that** a grease filling is introduced between the bearing surfaces between the plastic tube (2) and the steel tube (13).

4. Pivot bearing according to one of Claims 1 to 3, **characterized**
**in that**, in the manufactured state of the pivot bushing (1), the rubber layer (3) is thickened in the axial end regions to form peripheral, radially protruding rubber beads (4, 5),
**in that** the axial length of the receiving eye (14) is less than the length of the pivot bushing (1), in such a form that, in the pressed-in state of the pivot bushing (1), the receiving eye (14) lies preferably with rounded-off end faces between the rubber beads (4, 5) bearing against it under prestress, and
**in that**, in the mounted state, the end faces of the rubber layer (3) and the deformed rubber beads (4, 5) bear against the holding plates (15, 16) under prestress.

## Revendications

1. Palier d'articulation, plus particulièrement palier d'oeillet de ressort,
avec une douille d'articulation cylindrique (1) constituée d'au moins une partie tubulaire externe sur la surface cylindrique duquel une couche de caoutchouc (3) est vulcanisée,
avec une partie interne (13) insérée dans la partie tubulaire externe de la douille d'articulation (1),
avec un oeillet de logement (14) en tant que deuxième partie de palier , plus particulièrement un oeillet d'un ressort à lames dans lequel la douille d'articulation (1) d'un diamètre plus important au moins au niveau de certaines parties, est pressée avec une contrainte radiale de la couche de caoutchouc (3) pour la réalisation d'une liaison fixe en rotation entre la douille d'articulation (1) et l'oeillet de logement (14),
moyennant quoi la partie tubulaire externe est un tube en matière plastique (2)
et le tube en matière plastique externe (2) est maintenu fixe en rotation sur la partie (13) interne insérée à l'intérieure par liaison par friction dans des conditions de fonctionnement normales jusqu'à un couple initial de décollement, moyennant quoi la liaison par friction est dimensionnée de telle sorte que, pour une sollicitation rotative importante par le couple initial de décollement, le tube en matière plastique (2) glisse sur la partie (13), pour diminuer cette importante sollicitation rotative, vers une position moins sollicitée mais également maintenue fixe en rotation, plus particulièrement pour un ressort à lames monté sans contrainte, moyennant quoi la douille d'articulation (1) maintenue dans l'oeillet (14) correspondant peut être réglée automatiquement à une position nulle en fonction de la sollicitation statique à l'aide du glissement,
**caractérisé en ce que**
la partie interne est une partie tubulaire (13),
**en ce que** la première partie du palier est constitué de deux plaques de maintien (15, 16) espacées, plus particulièrement en tant que composants d'une suspension à ressorts d'un logement à ressort à lames d'un véhicule utilitaire,
avec une vis de fixation (17), moyennant quoi une tige fileté (20) est logé dans la partie tubulaire interne et s'appuie avec une tête de tige filetée (21) du côté extérieur d'une plaque de maintien (16) et avec un écrou du côté extérieur de l'autre plaque de maintien (15), de telle sorte que la partie tubulaire la plus longue des deux avec une longueur de déformation axiale, qui est conçue comme un tube d'acier, est serré de manière fixe et sans rotation entre les plaques de maintien (15, 16),
**en ce que** la partie tubulaire (13) présente, par rapport au tube de matière plastique (2) une longueur de déformation axiale plus importante et est serrée de manière fixe en rotation entre les plaques de maintien (15, 16),
**en ce que** le tube en matière plastique (2) est dimensionné en ce qui concerne son épaisseur et son élasticité, de telle sorte qu'une partie tubulaire solide soit obtenue ainsi que lors du pressage de la douille d'articulation (1) sans l'oeillet de logement (14) et l'application de la contrainte radiale dans la couche de caoutchouc (3) dimensionnée par la taille de l'oeillet de logement (14) et de la couche de caoutchouc (3), provoque une déformation élastique radiale du tube de matière plastique (2) et donc une augmentation de la liaison par friction par rapport au tube d'acier interne (13),
**en ce que**, au niveau des deux faces frontales du tubes de matière plastique (2), une lèvre d'étanchéité (7, 8) interne, orientée radialement et vers l'intérieur et située sur la circonférence sous contrainte au niveau du tube d'acier (13) inséré, est vulcanisée.

2. Palier d'articulation selon la revendication 1, **caractérisé en ce que** les lèvres d'étanchéité internes (7, 8) sont vulcanisées dans un évidement interne radial sur la circonférence du tube de matière plastique (2) avec la couche de caoutchouc (3) située sur la surface cylindrique externe, moyennant quoi, au niveau de faces frontales du tube de matière plastique (2), du fait de fentes de débordement entre la couche de caoutchouc (3) et les lèvres d'étanchéité internes (7, 8), se trouvent de minces couches de caoutchouc (11) qui peuvent être utilisées de préférence lors d'une adaptation correspondante de la longueur entre le tube d'acier (13) et le tube de matière plastique (2) pour l'étanchéité axiale par rapport aux plaques de maintien (15, 16).

3. Palier d'articulation selon la revendication 1 ou la revendication 2, **caractérisé en ce que**, entre les surfaces d'appui entre le tube de matière plastique (2) et le tube d'acier (13), un remplissage de graisse est effectué.

4. Palier d'articulation selon l'une des revendications 1 à 3, **caractérisé en ce que**,
dans l'état de fabrication de la douille d'articulation (1), la couche de caoutchouc (3) s'épaissit, au niveau des extrémités axiales, en bourrelets de caoutchouc (4, 5) circulaires espacés radialement,
**en ce que** la longueur axiale de l'oeillet de logement (14) est inférieure à la longueur de la douille d'articulation (1), **en ce que** dans l'état pressé de la douille d'articulation (1), l'oeillet de logement (14) se trouve de préférence avec des faces frontales arrondies entre les bourrelets de caoutchouc (4, 5) qui s'y appuient sous contrainte, et
**en ce que** dans l'état monté, les faces frontales de la couche de caoutchouc (3) et les bourrelets de caoutchouc (4, 5) déformés s'appuient sous contrainte sur les plaques de maintien (15, 16).
